# EUROPÄISCHE PATENTANMELDUNG

(11) **EP 2 481 469 A1**
(43) Veröffentlichungstag der Anmeldung: **01.08.2012**
(21) Anmeldenummer: 11152703.2
(22) Anmeldetag: 31.01.2011
(51) Int. Cl.: B01D 53/14

(54) **Lösungsmittel, Verfahren zur Bereitstellung einer Absorptionsflüssigkeit, Verwendung des Lösungsmittels und Verfahren zur Aktivierung eines Lösungsmittels**

(71) Anmelder: Siemens Aktiengesellschaft, 80333 München (DE)
(72) Erfinder: Die Erfindernennung liegt noch nicht vor

(57) **Zusammenfassung**

Die Erfindung betrifft ein Lösungsmittel (2) zur selektiven Absorption von CO₂ aus dem Rauchgas einer Verbrennungsanlage. Das Lösungsmittel (2) umfassend eine wässrige Lösung eines sekundären Aminosäuresalzes (4) als aktive Waschsubstanz und einen Zusatzstoff (6), wobei der Zusatzstoff (6) ein primäres Aminosäuresalz (3) umfasst. Die Erfindung betrifft weiterhin ein Verfahren zur Bereitstellung einer Absorptionsflüssigkeit, die Verwendung des Lösungsmittels (2) zur selektiven Absorption von CO₂ aus dem Rauchgas einer Verbrennungsanlage sowie ein Verfahren zur Aktivierung eines Lösungsmittels.

## Beschreibung

Bei fossilbefeuerten Kraftwerksanlagen zur Erzeugung elektrischer Energie entsteht durch die Verbrennung eines fossilen Brennstoffes ein kohlendioxidhaltiges Rauchgas. Zur Vermeidung bzw. zur Verringerung von Kohlendioxid-Emissionen muss Kohlendioxid aus den Rauchgasen abgetrennt werden. Zur Abtrennung von Kohlendioxid aus einem Gasgemisch sind allgemein verschiedene Methoden bekannt. Insbesondere zum Abtrennen von Kohlendioxid aus einem Rauchgas nach einem Verbrennungsprozess ist die Methode der Absorption-Desorption gebräuchlich. In großtechnischem Maßstab wird Kohlendioxid (CO₂) dabei mit einer Absorptionsflüssigkeit aus dem Rauchgas in einem Absorber herausgewaschen (CO₂ Capture Prozess).

Gängige Absorptionsflüssigkeiten (Lösungsmittel) basieren auf primären, sekundären oder tertiären Aminen und zeigen eine gute Selektivität und eine hohe Kapazität für Kohlendioxid CO₂.

Der Vorteil von sekundären Aminverbindungen (sekundäre Amine oder sekundäre Aminosäuresalze) gegenüber primären Aminverbindungen (primäre Amine oder primäre Aminosäuresalze) liegt in der deutlich niedrigeren Absorptionsenergie und der daraus resultierenden niedrigeren Regenerationsenergie, was sich in einem geringeren Wirkungsgradeinbruch des Kraftwerks bemerkbar macht. Darüber hinaus zeigen sekundäre Aminverbindungen eine höhere Beladungskapazität für CO₂. Ein Vorteil der primären Aminverbindungen ist die deutlich schnellere Absorptionskinetik. Dadurch lassen sich im Vergleich zu den sekundären Aminen oder sekundären Aminosäuresalzen die Kolonnen einer CO₂ Capture-Anlage kleiner auslegen, was zu geringeren Investitionskosten führt.

Der Vorteil von Aminosäuresalzen im Vergleich zu hetrocyklische Amine oder Alkanolaminen ist, dass Aminosäuresalze keinen merklichen Dampfdruck aufweisen, und somit nicht verdampfen und nicht durch den CO₂ Capture-Prozess in die Umwelt ausgetragen werden können. Hetrocyklische Amine und Alkanolamine sind flüchtig und werden durch das in die Umwelt emittierende Rauchgas mit ausgetragen, was zu unerwünschten Umweltbelastungen führt.

In der chemischen Industrie werden zurzeit hauptsächlich das primäre Amin MEA (Monoethanolamin) eingesetzt. Da der energetische Wirkungsgrad in der chemischen Industrie nicht im Mittelpunkt des Interesses steht, wurden bisher die energetischen Nachteile weites gehend vernachlässigt. In Kraftwerken hingegen ist gerade der Energieverbrauch des CO₂ Capture-Prozesses von großer Bedeutung, da er aufgrund seiner Größe einen erheblichen Einfluss auf den Gesamtwirkungsgrad des Kraftwerks hat. Diese technische Umsetzung ist aktuell Gegenstand der Forschung und Entwicklung, weshalb dieses Problem zurzeit im großen Maße optimiert wird.

Eine Aufgabe der Erfindung ist es, ein umweltverträgliches Lösungsmittel für die Absorption von CO2 bereit zu stellen, das eine hohe Absorptionsgeschwindigkeit und gleichzeitig einen geringen Energieverbrauch bei der Regeneration aufweist. Eine weitere Aufgabe der Erfindung besteht in der Angabe eines Verfahrens zur Bereitstellung einer Absorptionsflüssigkeit, durch die die Nachteile aus dem Stand der Technik vermieden werden. Weiterhin ist es Aufgabe der Erfindung eine Verwendung eines Lösungsmittels zur selektiven Absorption von CO₂ aus dem Rauchgas einer Verbrennungsanlage anzugeben bei der die Nachteile aus dem Stand der Technik vermieden werden. Zudem ist es Aufgabe der Erfindung, ein Verfahren zur Aktivierung eines umweltverträglichen Lösungsmittels anzugeben, sodass die Absorptionsgeschwindigkeit heraufgesetzt wird und der Energieverbrauch bei der Regeneration reduziert wird.

Die auf ein Lösungsmittel gerichtete Aufgabe der Erfindung wird gelöst durch ein Lösungsmittel umfassend eine wässrige Lösung eines sekundären Aminosäuresalzes und einen aktivierenden Zusatzstoff, wobei der aktivierende Zusatzstoff ein primäres Aminosäuresalz umfasst.

Die Erfindung macht sich zu nutze, dass primäre Aminverbindungen schneller mit CO₂ zu einer Karbamatverbindung reagieren, als sekundäre Aminverbindungen. Der Erfindung liegt nun die besondere Erkenntnis zu Grunde, dass bereits kleine Mengen einer primären Aminverbindung ausreichen, um die Absorption von CO₂ erheblich zu beschleunigen. Durch die Verwendung von Aminosäuresalzen bleibt das Lösungsmittel umweltverträglich, da es aufgrund des nicht nachweisbaren Dampfdrucks zu keinem Austrag des Aminosäuresalzes die Atmosphäre kommt. Durch die Erfindung ist es somit möglich, die Vorteile des sekundären Aminosäuresalzes, nämlich die niedrigere Regenerationsenergie und die höhere Beladungskapazität, mit denen des primären Aminosäuresalzes, nämlich die schnellere Absorptionskinetik, zu kombinieren.

Aufgrund der weiterhin dominierenden Menge an sekundärem Aminosäuresalz in dem Lösungsmittel wird die Regenerationsenergie nicht Erhöht. Sie kann sogar durch die Zugabe des Zusatzstoffes mit dem primären Aminosäuresalz weiter reduziert werden, da eine entsprechend höhere Beladung im Absorber erreicht wird und die treibende Kraft aufgrund der erhöhten Partialdruckdifferenz im Desorber zunimmt. Somit ergeben sich sowohl Einsparungen in der Auslegung des Absorbers aufgrund der erhöhten Absorptionsgeschwindigkeit, als auch Einsparungen bei der erforderlichen Regenerationsenergie.

Vorteilhaft hat sich ein Verhältnis zwischen sekundären Aminosäuresalz und primären Aminosäuresalz zwischen 80:20 (sekundäres Aminosäuresalz/primäres Aminosäuresalz) und 99:1, und weiter vorteilhaft zwischen 90:10 und 95:05 erwiesen. Das Verhältnis bezieht sich auf Gewichtprozente. Die Menge and primären Aminosäuresalz ist möglichst gering zu halten, um die negativen Einflüsse des primären Aminosäuresalzes auf das Lösungsmittel zu minimieren. Dabei gilt abzuwägen, ob es aus wirtschaftlichen Gesichtspunkten günstiger ist, bei höherem Anteil an primärem Aminosäuresalz, mehr Energie in die Desorption des Lösungsmittels zu investieren, mit dem Vorteil der schnelleren Reaktionsgeschwindigkeit, oder bei einem geringeren Anteil an primärem Aminosäuresalz die CO₂ Capture-Anlage entsprechend größer auszugestalten.

Die auf ein Verfahren gerichtete Aufgabe wird gelöst durch ein Verfahren zur Bereitstellung einer Absorptionsflüssigkeit, bei dem eine wässrigen Lösung mit einem sekundären Aminosäuresalz angesetzt wird, und in die wässrige Lösung ein Zusatzstoff eingebracht wird, wobei der Zusatzstoff mindestens ein primäres Aminosäuresalz umfasst.

Der Zusatzstoff kann dabei noch weitere Bestandteile beinhalten. Auch ist es möglich, dass verschiedene primäre Aminosäuresalze gemischt vorliegen.

Vorteilhaft hat sich ein Verhältnis zwischen sekundären Aminosäuresalz und primären Aminosäuresalz zwischen 80:20 und 99:1 erwiesen. Weiter Vorteilhaft ist das Verhältnis zwischen 90:10 und 95:05.

Die auf eine Verwendung gerichtete Aufgabe der Erfindung ist gelöst durch die Verwendung eines Lösungsmittels zur selektiven Absorption von CO₂ aus dem Rauchgas einer Verbrennungsanlage, wobei das Lösungsmittel eine wässrige Lösung eines sekundären Aminosäuresalzes und einen aktivierenden Zusatzstoff enthält, wobei der Zusatzstoff ein primäres Aminosäuresalz umfasst. Die Verbrennungsanlage kann dabei ein fossil befeuerten Dampfkraftwerk, eine Gasturbinenanlage, oder eine kombinierte Gas- und Dampfturbinenanlage sein.

Die auf ein Verfahren zur Aktivierung eines Lösungsmittels gerichtete Aufgabe der Erfindung wird gelöst durch ein Verfahren zur Aktivierung eines Lösungsmittels zur selektiven Absorption von CO₂ aus dem Rauchgas einer Verbrennungsanlage, bei dem das Lösungsmittel eine wässrige Lösung eines sekundären Aminosäuresalzes umfasst und bei dem das Lösungsmittel durch Zugabe eines aktivierenden Zusatzstoffes (6) aktiviert wird, wobei der Zusatzstoff ein primäres Aminosäuresalz umfasst. Das Verhältnis zwischen sekundären Aminosäuresalz und primären Aminosäuresalz liegt dabei vorteilhaft zwischen 80:20 und 99:1. Vorteilhaft lässt sich das Verfahren zur Aktivierung in einem CO₂ Capture-Prozess anwenden, bei dem die Absorption von CO₂ aus dem Rauchgas eines fossil befeuerten Dampfkraftwerks, aus dem Abgas einer Gasturbinenanlage, oder aus dem Abgas einer kombinierten Gas- und Dampfturbinenanlage erfolgt.

Nachfolgend werden Ausführungsbeispiele der Erfindung anhand von Figuren näher erläutert. Darin zeigt:
- FIG 1: ein Diagramm mit dem Vergleich unterschiedlicher Lösungsmittel
- FIG 2: ein Reaktionsschaubild mit der langsamen Reaktion von CO₂ mit einer sekundären Aminosäure
- FIG 3: ein Reaktionsschaubild mit der schnellen Reaktion von CO₂ mit einer primären Aminosäure
- FIG 4: ein Beispiel eines sekundären Amins

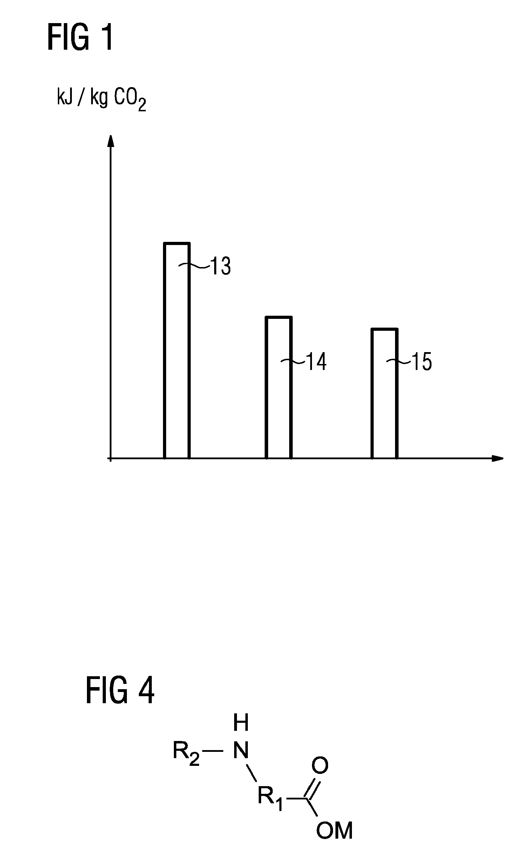

Das in FIG 1 dargestellte Diagramm zeigt die für die Abtrennung von CO₂ aus einem Rauchgas erforderliche spezifische Energie in kJ pro abgetrenntem kg CO₂. Die Achse ist nicht skaliert, weil die erforderliche Energie im Wesentlichen auch Abhängig ist von anderen Prozessparametern, wie Druck, Temperatur, Umpump, Rauchgasmassenstrom, etc.

Die Balken stehen für unterschiedliche Lösungsmittel 13, 14 und 15. Der linke Balken zeigt ein Lösungsmittel 13 mit ausschließlich einem sekundärem Aminosäuresalz als aktive Waschsubstanz. Der mittlere Balken zeigt ein Lösungsmittel 14 mit einem sekundärem Aminosäuresalz und einem primärem Aminosäuresalz als aktivierender Zusatzstoff, und der rechte Balken zeigt im vergleich dazu ein Lösungsmittel 15 mit einem sekundärem Aminosäuresalz und Monoethanolamin. Das Verhältnis bei den Lösungsmitteln 14 und 15 zwischen sekundärem Aminosäuresalz und Aminverbindung beträgt in diesem Beispiel 95:5 (Gewichtsprozente). Dargestellt ist die spezifisch, erforderliche Leistung, die zum Abtrennen von CO₂ aus einem Rauchgas erforderlich ist. Dabei wird hier unterstellt, dass sich außer dem verwendeten Lösungsmittel kein weiterer Prozessparameter ändert.

Zu erkennen ist, dass das Lösungsmittel 14 im Vergleich zu dem Lösungsmittel 13 wesentlich weniger spezifische Energie benötigt. Das bedeutet, bei gleichbleibender Kolonnengröße zeigt das mit einem primären Aminosäuresalz aktivierte Lösungsmittel 14, eine wesentliche geringere erforderliche spezifische Energie.

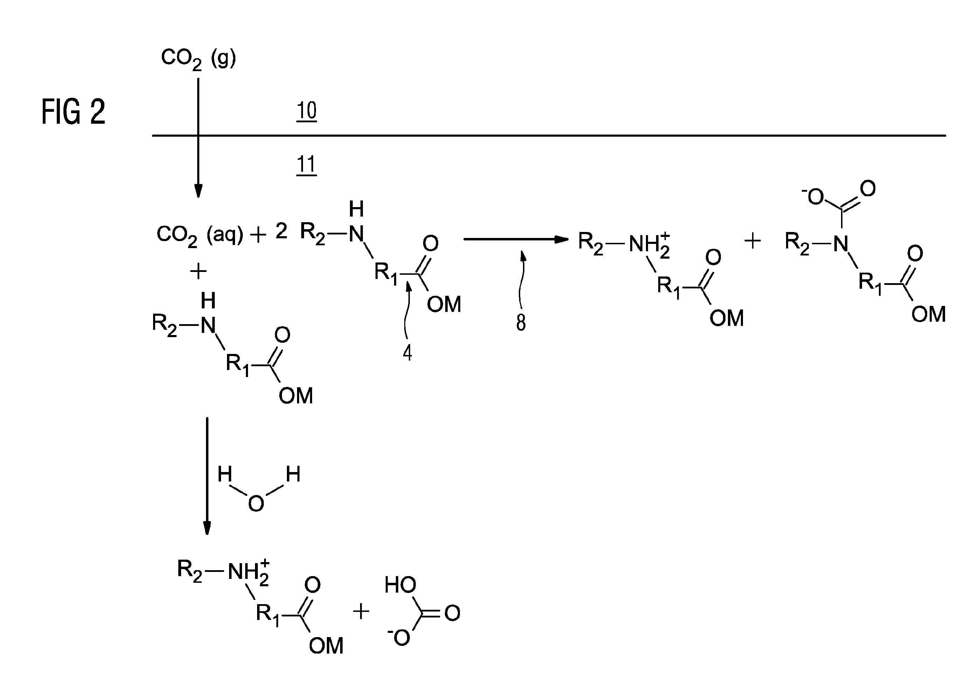

FIG 2 zeigt ein Reaktionsschaubild mit der langsamen Reaktion 8 von CO₂ mit einer sekundären Aminosäure. Dargestellt ist der Übergang des CO₂ von der Gasphase 10 in die Flüssigphase 11. Die Absorption von CO₂, bzw. der Übergang des CO₂ von der Gasphase 10 in die Flüssigphase 11 wirkt sich Geschwinigkeitsbestimmend auf den eigentlichen CO₂ Capture-Prozess aus, da die Bikarbonatbildung deutlich langsamer, als die Karbamatbildung ist, welche aufgrund der sterischen Hinderung des sekundären Aminosäuresalzes sehr gering ist.

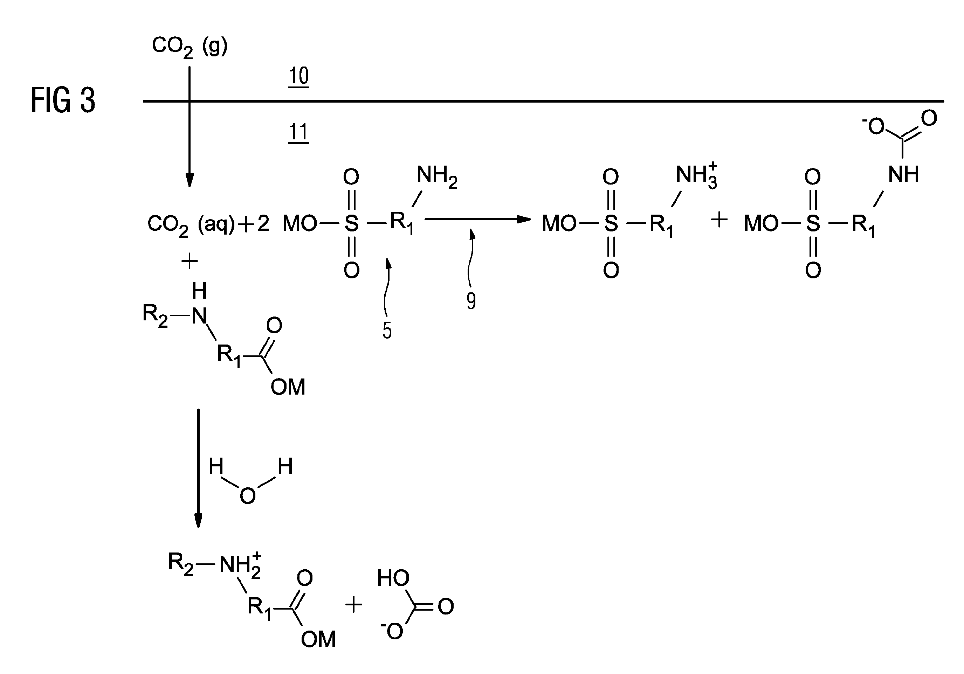

Im Vergleich zu FIG 2 zeigt FIG 3 ein Reaktionsschaubild mit der schnellen Reaktion 9 von CO₂ mit einer primären Aminosäure. Durch die beschleunigte Karbamatbildung des CO₂ infolge des zugesetzten primären Aminosäuresalzes wird das Gleichgewicht verschoben. Dadurch gelangt das CO₂ aus der Gasphase 10 schneller in die Flüssigphase 11 des Lösungsmittels und kann anschließend mit dem sekundären Aminosäuresalz Bikarbonat bilden.

Bezogen auf die Erfindung ist lediglich ein geringer Zusatz eines aktivierenden Zusatzstoffes mit einem primären Aminosäuresalz (Aktivator) notwendig um bereits eine erhebliche Beschleunigung des CO₂ Capture-Prozesses zu erreichen. Vorteilhaft hat sich ein Anteil von weniger als 20 gewichts-%, bezogen auf die Gesamtmenge an aktivem Aminosäuresalz, erwiesen. Eine höhere Zugabe an Aktivator würde die Absorptionskapazität verschlechtern, da das sekundäre Aminosäuresalz durch die Bildung des Bikarbonates 2 mol CO₂ pro mol Lösungsmittel aufnehmen kann. Das primäre Aminosäuresalz hingegen nur 1 mol CO₂ pro mol Lösungsmittel.

FIG 4 zeigt ein Beispiel für ein sekundäres Amin (Aminosäuresalz)wobei R1 und R2 stehen für Alkyl, Hydroxylalkyl oder Halogenalkyl und M für Na, K, Li, Mg, Ca oder Be.

## Patentansprüche

1. Lösungsmittel (2) umfassend eine wässrige Lösung eines sekundären Aminosäuresalzes (4) und einen aktivierenden Zusatzstoff (6), wobei der aktivierende Zusatzstoff (6) ein primäres Aminosäuresalz (3) umfasst.

2. Lösungsmittel (2) nach Anspruch 1, wobei das Verhältnis zwischen sekundären Aminosäuresalz (4) und primären Aminosäuresalz (3) zwischen 80:20 und 99:1 liegt.

3. Verfahren zur Bereitstellung einer Absorptionsflüssigkeit, bei dem
a) eine wässrigen Lösung mit einem sekundären Aminosäuresalz (4) angesetzt wird, und
b) in die wässrigen Lösung ein aktivierender Zusatzstoff (6) eingebracht wird, wobei der Zusatzstoff (6) ein primäres Aminosäuresalz (3) umfasst.

4. Verfahren nach Anspruch 3, bei dem das Verhältnis zwischen sekundären Aminosäuresalz (4) und primären Aminosäuresalz (3) auf zwischen 80:20 und 99:1 eingestellt wird.

5. Verwendung eines Lösungsmittels (2) zur selektiven Absorption von CO₂ aus dem Rauchgas einer Verbrennungsanlage, wobei das Lösungsmittel (2) eine wässrige Lösung eines sekundären Aminosäuresalzes (4) und einen aktivierenden Zusatzstoff (6) enthält, wobei der Zusatzstoff (6) ein primäres Aminosäuresalz (3) umfasst.

6. Verwendung nach Anspruch 5, bei der die Absorption von Kohlendioxid aus dem Rauchgas eines fossil befeuerten Dampfkraftwerks, aus dem Abgas einer Gasturbinenanlage, oder aus dem Abgas einer kombinierten Gas- und Dampfturbinenanlage erfolgt.

7. Verfahren zur Aktivierung eines Lösungsmittels (2) zur selektiven Absorption von CO₂ aus dem Rauchgas einer Verbrennungsanlage, bei dem das Lösungsmittel (2) eine wässrige Lösung eines sekundären Aminosäuresalzes (4) umfasst und bei dem das Lösungsmittel (2) durch Zugabe eines aktivierenden Zusatzstoffes (6) aktiviert wird, wobei der Zusatzstoff (6) ein primäres Aminosäuresalz (3) umfasst.

8. Verfahren nach Anspruch 7, bei dem das Verhältnis zwischen sekundären Aminosäuresalz (4) und primären Aminosäuresalz (3) zwischen 80:20 und 99:1 liegt.

9. Verfahren nach einem der Ansprüche 3 oder 4, bei der die Absorption von CO₂ aus dem Rauchgas eines fossil befeuerten Dampfkraftwerks, aus dem Abgas einer Gasturbinenanlage, oder aus dem Abgas einer kombinierten Gas- und Dampfturbinenanlage erfolgt.
